# EUROPÄISCHE PATENTSCHRIFT

(11) **EP 1 647 480 B1**
(45) Veröffentlichungstag und Bekanntmachung des Hinweises auf die Patenterteilung: **08.12.2010**
(21) Anmeldenummer: 05022132.4
(22) Anmeldetag: 11.10.2005
(51) Int. Cl.: B64C 1/12

(54) **Fugenabdeckung in Flugzeugen**
Joint covering for aircraft
Couvre-joint pour aéronefs

(30) Priorität: 13.10.2004 DE 102004049893; 13.10.2004 US 618130 P
(43) Veröffentlichungstag der Anmeldung: 19.04.2006
(73) Patentinhaber: Airbus Operations GmbH, 21129 Hamburg (DE)
(72) Erfinder: Granzeier, Werner, 21635 Jork (DE); Wietzke, Andreas, 22419 Hamburg (DE); Schröder, Jan, 22559 Hambrug (DE)
(74) Vertreter: Dilg, Andreas

(56) Entgegenhaltungen:
- EP-A- 1 449 764
- FR-A- 2 322 244
- US-A- 5 014 934
- US-A- 5 695 154
- US-B1- 6 276 634

## Beschreibung

Die vorliegende Erfindung betrifft Fugenabdeckungen für Flugzeuge. Insbesondere betrifft die vorliegende Erfindung eine Fugenabdeckung zur Abdeckung einer Fuge in einem Flugzeug, die Verwendung einer Fugenabdeckung in einem Flugzeug und ein Flugzeug, umfassend eine entsprechende Fugenabdeckung.

In Flugzeugen werden Inneneinrichtungen, wie beispielsweise Decken- oder Wandverkleidungen, mit entsprechend gelagerten Halter- oder Befestigungselementen an der Primärstruktur oder anderen tragenden Flugzeugelementen befestigt. Während des Fluges verformt sich der Rumpf des Flugzeuges, beispielsweise aufgrund von Druckdifferenzen, signifikant. Somit wirken auf die Befestigungen oder Verkleidungselemente teilweise erhebliche Spannungen, welche zu einer Verformung oder Verschiebung der Verkleidungen und zu visueller Änderung der Spalt- oder Fugenmaße relativ zueinander führen.

Flugzeugkabinen werden alle in etwa dem gleichen technologischen Verfahren hergestellt. Alle Bauteile, wie z.B. Wandverkleidungselemente (Fenster-Paneelen, Fenster-Frontplatten, Deckenverkleidungen) erhalten aufwendige Kantenradien und werden zum Teil dreidimensional im Raum aufgehängt. Ein Festlager und ein Loslager sichern die Beweglichkeit bei Rumpfverformungen. Hierbei werden große Bewegungen oder Verformungen des Rumpfes dem Passagier sofort sichtbar.

Elastische Sichtabdeckungen innerhalb oder hinter den Fugen, wie beispielsweise Kederbänder, sind ein permanentes Störteil im Tagesbetrieb und erfordern regelmäßige Instandsetzung.

Weiterhin sind der notwendige Ausbau, Einbau, die Wartung und die Instandhaltung der Fenster-Paneelen oder Fenster-Frontplatten zeit- und kostentreibende Faktoren im täglichen Betrieb.

Die EP 1 449 764 A2, die den nächstliegenden Stand der Technik darstellt, betrifft ein Verfahren zum schnellen Isolieren der Innenhaut eines Flugzeugs. Das System umfasst eine Isoliermatte und ein Befestigungssystem mit vertikalen Schienen.

Die US 6,276,634 B1 offenbart ein Notbeleuchtungssystem für ein Flugzeug mit selbst leuchtenden Streifen, die zum Schutz mit Abdeckungselementen bedeckt sind.

Die US 5,014,934 betrifft eine entfernbare Abdichtung für Diskontinuitäten in einer Flugzeugaußenhaut.

Die F-A-2 322 244 betrifft eine Vorrichtung zum Verbinden von Paneelen.

Insbesondere die Bauteile und Fugen in den sphärischen Bereichen einer Kabine sind besonderen Anforderungen ausgesetzt.

Es ist eine Aufgabe der vorliegenden Erfindung, eine Fugenabdeckung insbesondere für Flugzeuge bereitzustellen, welche eine einfache und sichere Abdeckung von Fugen gestattet.

Gemäß einem Ausführungsbeispiel der vorliegenden Erfindung, wie in Anspruch 1 angegeben, wird die obige Aufgabe mittels einer Fugenabdeckung zur Abdeckung einer Fuge zwischen einem ersten Element und einem zweiten Element in einem Flugzeug gelöst, umfassend einen Klemmabschnitt und einen Abdeckungsabschnitt, wobei der Abdeckungsabschnitt zur Abdeckung einer Fuge zwischen einem ersten Element und einem zweiten Element ausgeführt ist, wobei der Klemmabschnitt zum Befestigen der Fugenabdeckung zumindest an einem dritten Element derart ausgeführt ist, dass das erste und das zweites Element relativ zueinander bewegbar sind, so dass sich die Fuge zusammenziehen kann.

Die erfindungsgemäße Fugenabdeckung schirmt somit die Fuge, welche zwischen zwei (evtl. bewegbar gelagerten) Wand- oder Deckenverkleidungselementen besteht, visuell und mechanisch ab. Hierbei kann die Fugenabdeckung beispielsweise an der Primärstruktur des Flugzeugs angebracht sein oder an einem der Wandverkleidungselemente. Somit ist gewährleistet, dass die Fluggäste einerseits Verformungen des Rumpfes nicht mehr unmittelbar über Änderungen der Fugenbreite wahrnehmen können und dass andererseits keine Gegenstände mehr in der Fuge eingequetscht werden können, da der Abdeckungsabschnitt die Fuge nicht nur visuell, sondern auch mechanisch abdeckt.

Gemäß einem weiteren Ausführungsbeispiel der vorliegenden Erfindung, wie in Anspruch 2 angegeben, wobei das erste Element eine erste Inneneinrichtung eines Flugzeugs und das zweite Element eine zweite Inneneinrichtung eines Flugzeugs ist.

Somit können Fugen zwischen Flugzeuginneneinrichtungen einfach und sicher verdeckt und geschützt werden.

Gemäß einem weiteren Ausführungsbeispiel der vorliegenden Erfindung, wie in Anspruch 3 angegeben, besteht der Abdeckungsabschnitt im Wesentlichen aus einem elastischen Material, wobei der Abdeckungsabschnitt im entspannten Zustand eine Krümmung aufweist und wobei der Abdeckungsabschnitt nach Montage der Fugenabdeckung in der Fuge unter Spannung an den Vorderseiten des ersten Elements und des zweiten Elements angelegt ist.

Somit kann der Abdeckungsabschnitt nach Einbau der Fugenabdeckung mechanischen Zug auf den dahinter befindlichen Klemmabschnitt ausüben und weiterhin eine enganliegende Position zu dem ersten Element und dem zweiten Element einnehmen, so dass keine Gegenstände zwischen die Fugenabdeckung und den Elementen geschoben werden können.

Gemäß einem weiteren Ausführungsführungsbeispiel der vorliegenden Erfindung, wie in Anspruch 4 angegeben, weist der Klemmabschnitt einen ersten Teilbereich auf, welcher bei Montage der Fugenabdeckung durch die Fuge hindurchschiebbar ist, wobei der hintere Bereich nach Montage der Fugenabdeckung in der Fuge rückseitig an dem ersten Element und dem zweiten Element angelegt ist, so dass ein Herauslösen der Fugenabdeckung aus der Fuge vermeidbar ist.

Auf diese Weise kann die Fugenabdeckung einfach und schnell in der Fuge montiert werden. Dies erfolgt beispielsweise durch einfaches Hereindrücken der Fugenabdeckung in die Fuge. Der hintere Bereich des Klemmabschnitts ist hierfür beispielsweise zusammengedrückt und dehnt sich dann nach erfolgtem Hereinschieben entsprechend aus, so dass er ein späteres Herausziehen der Fugenabdeckung aus der Fuge verhindert.

Gemäß einem weiteren Ausführungsbeispiel der vorliegenden Erfindung, wie in Anspruch 5 angegeben, handelt es sich bei dem ersten Element und dem zweiten Element um Verkleidungen, die ihre Lage oder Form relativ zu ihrem Umfeld während des Flugbetriebes verändern können, wobei die Fugenabdeckung den Bewegungen des ersten Elements weitgehend folgt und wobei der Abdeckungsabschnitt stets an dem ersten Element und dem zweiten Element angelegt ist.

Vorteilhafterweise ist somit eine Fugenabdeckung angegeben, welche auf einfache Art und Weise mit dem ersten Element verbunden werden kann und, beispielsweise aufgrund von Federkräften, eine enge Anlage des Abdeckungsabschnitts an die beiden Elemente gewährleistet.

Gemäß einem weiteren Ausführungsbeispiel der vorliegenden Erfindung, wie in Ansprüchen 6 und 7 angegeben, weist der Klemmabschnitt einen zweiten Teilbereich auf, welcher mit dem Abdeckungsabschnitt fest verbunden ist, wobei der zweite Teilbereich oder der erste Teilbereich des Klemmabschnitts an dem ersten Element befestigt ist und wobei die Befestigung durch Verkleben, Anklipsen, Ultraschallschweißen, Verschrauben, Vernieten oder durch Haftkraft erfolgt.

Vorteilhafterweise wird damit eine Fugenabdeckung angegeben, welche in multifunktionaler Weise an eine Vielzahl von Flächen in dem Flugzeug montierbar ist.

Gemäß einem weiteren Ausführungsbeispiel der vorliegenden Erfindung, wie in Anspruch 8 angegeben, umfasst die Fugenabdeckung weiterhin ein Bauteil, ausgewählt aus der Gruppe bestehend aus Beleuchtungseinrichtung, Sensoreinrichtung, Lautsprecher, und Anzeigeeinrichtung.

Gemäß einem weiteren Ausführungsbeispiel der vorliegenden Erfindung, wie in Anspruch 9 angegeben, weist der Abdeckungsabschnitt ein transluzentes Material auf, so dass die Fugenabdeckung durchleuchtbar ist.

Somit kann die Konzeption der Fugenabdeckung und somit der gesamten Flugzeugkabine den individuellen Kundenwünschen angepasst werden. Gemäß den Ausführungsbeispielen der Ansprüche 8 und 9 ist die erfindungsgemäße Fugenabdeckung als Informationsträger verwendbar.

Gemäß einem weiteren Ausführungsbeispiel der vorliegenden Erfindung, wie in Anspruch 10 angegeben, ist die Fugenabdeckung als Strangpressprofil ausgebildet. Ein Strangpressprofil oder Extruderprofil aus Kunststoff bietet den Vorteil der Kostengünstigen Herstellung als Endlosbauteil. Dichtelemente und Hinterschnitte können mit einkonstruiert werden. Das Ablängen auf die nötige Bauteillänge bietet besonders die Möglichkeit diese Fugenteile im Nachrüstbereich in bestehende Kabinen einzusetzen. Bei geeigneter Materialwahl stellt der Einbau dieser Teile in gekrümmter Position kein Problem dar. Durch flexible Materialien kann sich das Profil an die Bauteil-Geometrie und an die sich verschiebenden Flächen anpassen. Entsprechende Oberflächen und Farbstellungen können für das Kunden Corporate benutzt werden.

Gemäß einem weiteren Ausführungsbeispiel der vorliegenden Erfindung, wie in Anspruch 11 angegeben, ist die Fugenabdeckung als Spritzgussteil ausgebildet. Als Spritzgussbauteil lassen sich alle Vorteile einer dreidimensionalen Formgebung ausschöpfen. Besonders die Einbauvorbereitung für Beleuchtungs-, Beschallungselemente (Lautsprecher) und Sensoren oder Anzeigegeräte lassen sich sinnvoll in einem Spritzgussteil umsetzen. Durch die Einbauvarianten und Kombination von durchsichtigen und undurchsichtigen Materialien mit zahlreichen Varianten der Oberflächen-Formgebung lassen sich innovative Designelemente in der Kabine herstellen und einbauen. Die aufwendige Kantenbearbeitung der in diesem Bereich verdeckten Bauteile kann entfallen.

Weitere Ausführungsbeispiele der vorliegenden Erfindung ergeben sich aus dem Verwendungsanspruch und dem zusätzlichen unabhängigen Vorrichtungsanspruch.

Im Folgenden werden mit Verweis auf die Figuren bevorzugte Ausführungsbeispiele der vorliegenden Erfindung beschrieben.

Fig. 1 zeigt eine schematische Darstellung eines Fensterbereichs in einer Flugzeugkabine.

Fig. 2 zeigt eine schematische Darstellung einer Fugenabdeckung gemäß eines Ausführungsbeispiels der vorliegenden Erfindung.

Fig. 3 zeigt eine schematische Querschnittsdarstellung der Fugenabdeckung von Fig. 2.

Fig. 4 zeigt eine schematische Darstellung einer weiteren Fugenabdeckung gemäß eines weiteren Ausführungsbeispiels der vorliegenden Erfindung.

Fig. 5 zeigt eine schematische Querschnittsdarstellung der Fugenabdeckung von Fig. 4.

Fig. 6 zeigt eine schematische Darstellung einer weiteren Fugenabdeckung gemäß eines weiteren Ausführungsbeispiels der vorliegenden Erfindung.

Fig. 7 zeigt eine schematische Darstellung einer weiteren Fugenabdeckung gemäß eines Ausführungsbeispiels der vorliegenden Erfindung.

Fig. 8 zeigt eine schematische Querschnittsdarstellung der Fugenabdeckung von Fig. 7.

Fig. 9 zeigt eine schematische Querschnittsdarstellung der Fugenabdeckung von Fig. 2 in drei verschiedenen Phasen der Montage.

Fig. 10 zeigt eine schematische Querschnittsdarstellung einer weiteren Fugenabdeckung gemäß eines Ausführungsbeispiels der vorliegenden Erfindung.

In der folgenden Figurenbeschreibung werden für die gleichen oder ähnlichen Elemente die gleichen Bezugsziffern verwendet.

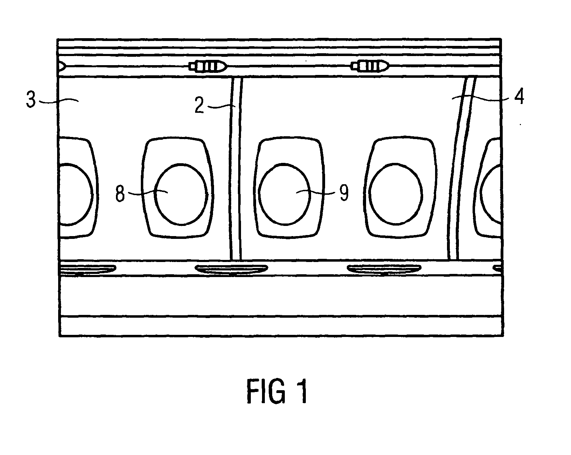

Fig. 1 zeigt eine schematische Darstellung eines Fensterbereichs in einer Flugzeugkabine. Wie in Fig. 1 zu erkennen, weist der Fensterbereich verschiedene Wandverkleidungen oder Fenster-Paneelen oder Fenster-Frontplatten 3, 4 auf, welche die Fenster 8, 9 aufnehmen. Aufgrund der Verformung des Flugzeugrumpfes während des Fluges, welche beispielsweise aufgrund der enormen Druckdifferenzen hervorgerufen werden kann, kann es zu einer Verformung und relativen Verschiebung der Fenster-Paneelen 3, 4 relativ zueinander kommen. Aus diesem Grund sind die Seitenverkleidungen 3, 4 mit Abstand zueinander an der Primärstruktur des Flugzeuges oder anderen tragenden Teilen fixiert. Die zwischen den Seitenverkleidungen 3, 4 liegende Fuge dehnt sich während des Fluges aus oder zieht sich zusammen.

Die Fugen sind in der Interior-Bauteilausstattung eines Verkehrsmittels (hier sind nicht ausschließlich Flugzeuge angesprochen; vielmehr kann es sich auch um andere Verkehrsmittel, wie beispielsweise Bus, Bahn, Schiff oder ähnlichem handeln) ein wesentliches ästhetisches, konstruktives und funktionales Element. Durch die erfindungsgemäße Fugenabdeckung mit ihrem Abdeckungsabschnitt 2, welcher sich in direktem visuellen Sichtbereich des Passagiers befindet, kann ein hoher Grad an sichtbarer Designqualität, Produktinformation, Wirkung und Vertrauensbildung bei den Passagieren erreicht werden.

Hierfür können beispielsweise Informationsmedien, wie Leuchtdioden-Arrays, Lautsprecher, Duftgeber, Bildschirme oder Info-Screens in die erfindungsgemäße Fugenabdeckung integriert werden. Weiterhin können Sensorsysteme für berührungslose Funktion in die Fugenabdeckung eingebaut werden, welche dem Fluggast einen erhöhten Komfort gestatten.

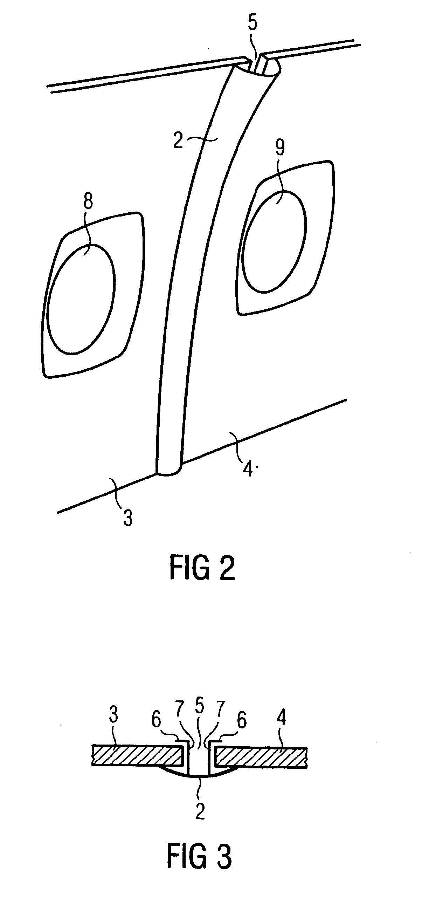

Fig. 2 zeigt eine schematische Darstellung einer Fugenabdeckung gemäß eines Ausführungsbeispiels der vorliegenden Erfindung. Wie in Fig. 2 zu erkennen, ist die Fugenabdeckung, welche einen Abdeckungsabschnitt 2 aufweist, zwischen den Inneneinrichtungen 3, 4 montiert. Hierbei wird die Fuge 5, welche sich zwischen den beiden Inneneinrichtungen 3, 4 befindet, vollständig von dem Abdeckungsabschnitt 2 abgedeckt.

Aufgrund der Konstruktion der angepassten Fugenabdeckung kann dieses Bauteil für jede Fenster-Paneel-Fuge verwendet werden. Durch Klemmen, Klipsen, Stecken, Ultraschallschweißen, Verschrauben, Vernieten oder aber auch durch eine Haft- oder Klemmkraft können alle Varianten der Fugenabdeckung einfach befestigt und installiert werden und somit die Fuge wirksam abdecken.

Da die Fugen durch die erfindungsgemäße Fugenabdeckung abgedeckt werden, sind keine aufwendigen Kantenradien bei der Herstellung der Fenster-Paneele erforderlich, wodurch Produktionskosten eingespart werden können. Es werden alle Toleranzen abgedeckt und insbesondere eine Abdeckung der Fuge bereitgestellt, welche auch im Falle eines Unfalls verletzungsmindernde Funktion aufweist, da die Kanten der Seitenteile 3, 4 durch die Fugenabdeckung verborgen werden und weiterhin die öffnungsgemäße Fugenabdeckung eine zusätzliche Fixierung der Seitenteile relativ zueinander gewährleisten kann. Kederbänder oder sog. "Filler Strips" können an dieser Stelle entfallen.

Fig. 3 zeigt eine schematische Querschnittsdarstellung der Fugenabdeckung von Fig. 2. Wie Fig. 3 zu entnehmen, ist die Fugenabdeckung, welche im Wesentlichen aus dem Abdeckungsabschnitt 2 und dem Klemmabschnitt 6, 7 besteht, zwischen den beiden Inneneinrichtungen 3, 4 positioniert. Der Abdeckungsabschnitt 2 besteht hierbei aus einem elastischen Material, welches im entspannten Zustand eine gewölbte Form aufweist. Im montierten Zustand liegt der Abdeckungsabschnitt 2, wie in Fig. 3 zu erkennen, eng an der ersten 3 und der zweiten Inneneinrichtung 4 an. Hierbei kann sich der Abdeckungsabschnitt 2 unter Spannung befinden, so dass ein enges Anliegen des Abdeckungsabschnitts 2 an die Oberflächen der Inneneinrichtungen 3, 4 auch bei einer Relativbewegung der Inneneinrichtungen 3, 4 zueinander gewährleistet ist.

Der Abdeckungsabschnitt 2 ist hierbei in seiner Dimensionierung größer gehalten als die Breite der Fuge 5. Somit ist eine stets vollständige Abdeckung der Fuge auch bei Verformung des Flugzeugrumpfes gewährleistet.

Der Klemmabschnitt 6, 7 besteht aus einem hinteren Bereich 6 und aus einem vorderen Bereich 7, welcher fest mit dem Abdeckungsabschnitt 2 verbunden ist. Der hintere Bereich 6 dient dazu, ein Herausrutschen der Abdeckung aus der Fuge zu verhindern. Um die Fugenabdeckung ausreichend fest in der Fuge zu halten, können beispielsweise Haftkräfte, welche durch die Federkraft des Abdeckungsabschnitts 2 erzeugt werden, ausgenutzt werden. Hierbei drückt die Abdeckung 2 mit ihren Außenkanten an die Oberflächen der Inneneinrichtungen 3, 4 und erzeugt somit eine Kraft, welche den hinteren Bereich 6 des Klemmabschnitts 6, 7 gegen die Rückseiten der Inneneinrichtungen 3, 4 zieht, so dass die Fugenabdeckung an die Inneneinrichtungen 3, 4 angeklemmt ist.

Natürlich sind aber auch andere Befestigungen möglich. Beispielsweise kann der vordere Bereich 7 oder der hintere Bereich 6 des Klemmabschnitts 6, 7 an die erste Inneneinrichtung 3 angeklebt, angeklipst, angeschweißt, angeschraubt oder angenietet sein, so dass hier eine starre Verbindung gewährleistet ist und die Fugenabdeckung den Bewegungen der ersten Inneneinrichtung 3 somit weitgehend folgt. Inneneinrichtung 4 hingegen kann sich relativ zur Fugenabdeckung bewegen, wobei aufgrund der Abmessungen der Abdeckung 2 stets eine vollständige Abdeckung der Fuge 5 gewährleistet ist.

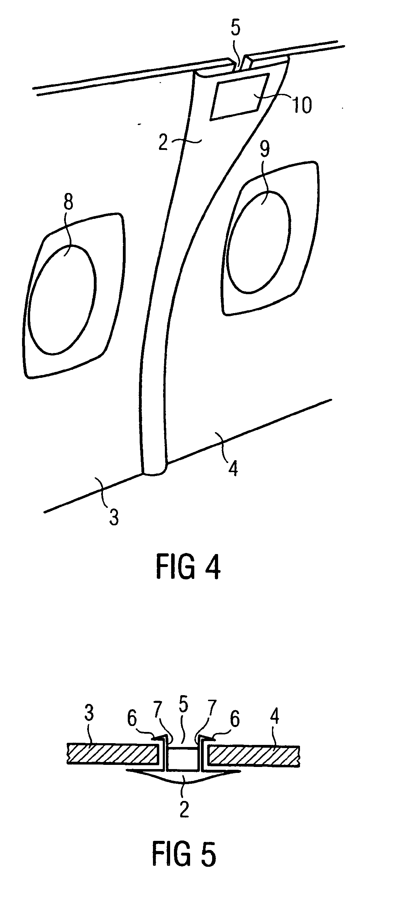

Fig. 4 zeigt eine schematische Darstellung einer weiteren Fugenabdeckung gemäß eines weiteren Ausführungsbeispiels der vorliegenden Erfindung. Der Abdeckungsabschnitt 2, welcher die Fuge 5 verdeckt, weist hierbei einen Monitor 10 auf, über welchen Informationen an den Fluggast abgegeben werden können. Anstelle eines Monitors 10 kann auch ein Leuchtdioden-Display oder eine andere Art von Info-Screen in die Fugenabdeckung integriert werden. Diese Integration erfolgt beispielsweise im Herstellungsprozess der Fugenabdeckung, wodurch die Endmontage der Einheit erleichtert wird.

Fig. 5 zeigt eine schematische Querschnittsdarstellung der Fugenabdeckung von Fig. 4. Der Abdeckungsabschnitt 2 ist hierbei als Volumenbauteil ausgeführt, dessen Rückseite flach an den Inneneinrichtungen 3, 4 anliegt. Der hintere Bereich 6 des Klemmabschnitts 6, 7 gewährleistet im Zusammenspiel mit dem Abdeckungsabschnitt 2 einen festen Sitz der Fugenabdeckung in der Fuge 5.

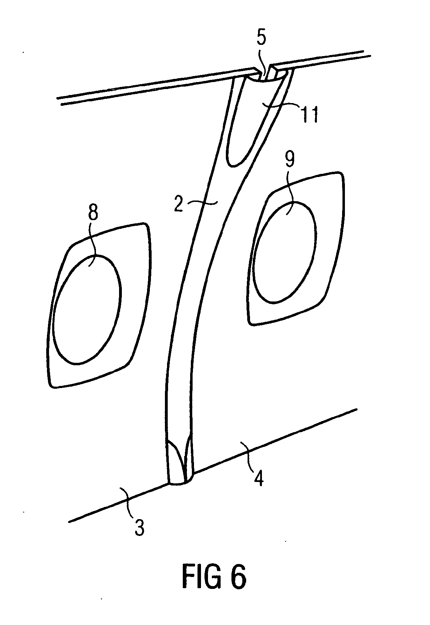

Fig. 6 zeigt eine schematische Darstellung einer weiteren Fugenabdeckung gemäß eines weiteren Ausführungsbeispiels der vorliegenden Erfindung. Hierbei weist der obere Bereich des Abdeckungsabschnitts 2 ein transluzentes Material auf. Dieses transluzente Material 11 kann beispielsweise durch eine hinter der Fugenabdeckung oder in der Fugenabdeckung integrierten Lichtquelle rückseitig durchleuchtet werden. Hierbei ist es möglich, diverse Farbeffekte oder Lichteffekte zu erzielen, welche auf angenehme oder beruhigende oder aber auch auf informative Art und Weise auf die Sinnesorgane der Fluggäste einwirken können.

Das transluzente Material 11 kann beispielsweise in Form eines durchscheinenden Polyesterfilms mit spezieller Beschichtung ausgeführt sein. Der Polyesterfilm 11 kann beispielsweise in Form einer Plotterfolie ausgeführt sein, welche für Lichtwerbung geeignet ist.

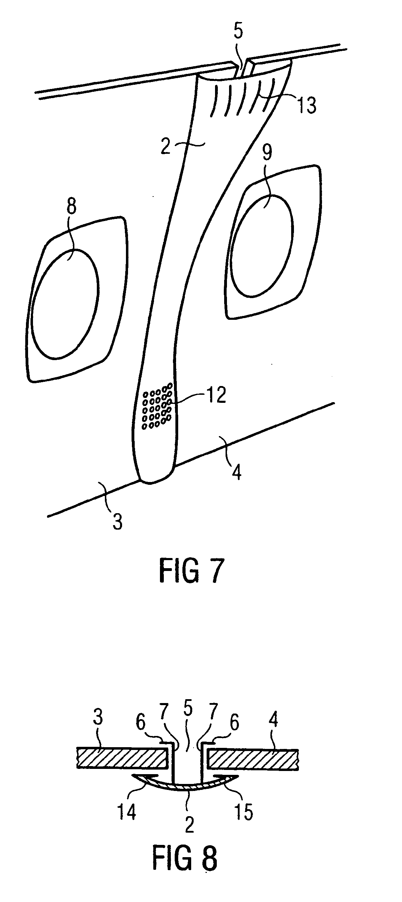

Fig. 7 zeigt eine schematische Darstellung einer weiteren Fugenabdeckung gemäß eines Ausführungsbeispiels der vorliegenden Erfindung. Der Abdeckungsabschnitt 2 weist hierbei Sensorsysteme 12 auf, welche zur berührungslosen Messung physikalischer Parameter ausgeführt sind. Beispielsweise kann es sich hierbei um Temperatursensoren, Luftfeuchtigkeitssensoren, Geruchssensoren, Lichtsensoren oder Schallsensoren handeln. Diese Sensorik dient im Wesentlichen dazu, Daten über die physikalischen Verhältnisse im Bereich des Fluggastes zu erhalten und diese Daten dann nachfolgend an einen entsprechenden Prozessor weiterzugeben, welcher eine Auswertung und darauf aufbauend eine Regelung vornehmen kann.

Auch kann im Bereich der Sensorsysteme 12 eine LED-Lichtreihe integriert sein (oder aber auch in einem anderen Bereich), welche Lichtsignale oder Lichtzeichen aussenden kann. Hierbei kann es sich beispielsweise um Sitznummern, Notzeichen oder Verbots- oder Gebotszeichen handeln.

Eine derartige LED-Lichtreihe oder aber auch ein Monitor 10 kann zur Darstellung einer bestimmten Information in der Flugzeugkabine verwendet werden, welche die Information als Schrift oder Piktogramm wiedergibt. Hierbei handelt es sich beispielsweise um die Wiedergabe von Befehlen oder Warnhinweisen, wie beispielsweise "No smoking" oder "Fasten seat belt".

Die Informationen, die hierbei dargestellt werden, können ganz verschiedener Natur sein. Beispielsweise ist es möglich, statische Informationen abzubilden, beispielsweise in Form von Rauchverbotszeichen oder Aufforderungen zum Anschnallen oder dergleichen. Auch können hier Informationen bezüglich der entsprechenden Sitzreihe oder des entsprechenden Sitzplatzes oder aber auch Fluchtweginformationen abgebildet werden. Bei den Fluchtweginformationen sind beispielsweise Pfeile darstellbar, welche in Richtung des nächstmöglichen Notausganges weisen. Natürlich sind aber auch dynamische Informationen darstellbar, wie beispielsweise Unterhaltungsfilme oder das Wohlbefinden steigernde visuelle Stimuli. Natürlich können aber auch Informationen, welche technische Sachverhalte betreffen, individuell angezeigt werden. Hierbei kann es sich beispielsweise um die aktuelle Fluggeschwindigkeit, die aktuelle Flughöhe, die Distanz zum Zielort, die Außentemperatur oder aber auch die aktuelle Temperatur am Zielort handeln. Hier ist es z. B. möglich, dass eine Steuereinheit vorgesehen ist (nicht dargestellt in Fig. 7), welche ebenfalls in der Fugenabdeckung oder im Fluggastsitz integriert ist, und welche über einen entsprechenden Datenspeicher verfügt, so dass der Fluggast alle Informationen, welche er benötigt, individuell auswählen kann.

Im oberen Bereich der Abdeckung 2 ist eine Anordnung von Schlitzen 13 integriert, welche für die Beschallung eines hinter oder innerhalb der Fugenabdeckung integrierten Lautsprechers (nicht gezeigt in Fig. 7) ausgeführt ist.

Fig. 8 zeigt eine schematische Querschnittsdarstellung der Fugenabdeckung von Fig. 7. Hier ist zu erkennen, dass der Abdeckungsabschnitt 2 an seinen Seiten Winkel 14, 15 aufweist, welche flach an den Oberflächen der Innenverkleidungen 3, 4 anliegen.

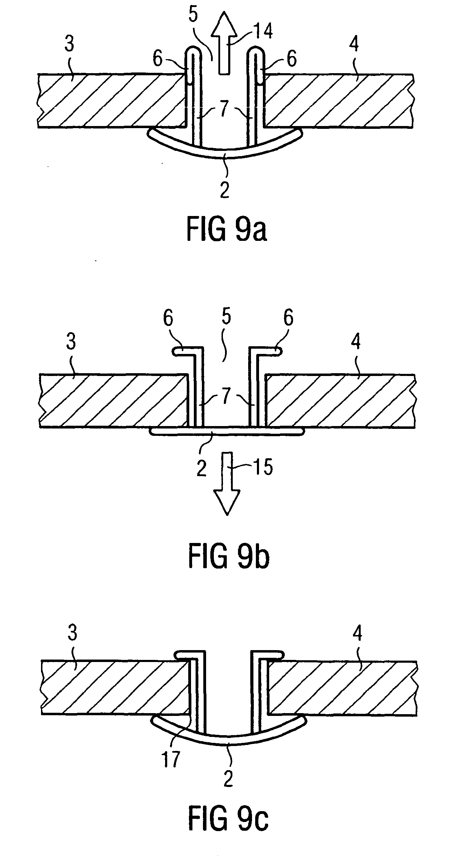

Fig. 9 zeigt eine schematische Querschnittsdarstellung der Fugenabdeckung von Fig. 2 in drei verschiedenen Phasen der Montage.

Wie Fig. 9A zu entnehmen, wird der hintere Abschnitt 6 des Klemmabschnitts 6, 7 beim Hereinschieben der Fugenabdeckung in die Fuge 5 abgewinkelt oder zusammengedrückt. Diese Abwinklung wird beispielsweise dadurch ermöglicht, dass der hintere Bereich 6 aus einem Material besteht, welches sich in die entsprechende Richtung (elastisch) verbiegen lässt. Hierbei kann es sich beispielsweise um ein entsprechend geformtes Gummielement handeln. Auch können aber Gelenke an den Übergängen zwischen vorderen 6 und hinteren Bereichen 7 des Klemmabschnitts 6, 7 vorgesehen sein, welche ein Abknicken des hinteren Bereichs 6 ermöglichen, so dass sich die Fugenabdeckung in die Fuge 5 hineinschieben lässt, obwohl der Querschnitt der Klemmung 6, 7 im gespannten Zustand größer ist, als die Breite der Fuge 5. Das Hereinschieben erfolgt in Richtung des Pfeils 14.

Fig. 9B zeigt die zweite Phase der Montage der Fugenabdeckung. Der hintere Bereich 6 des Klemmabschnitts 6, 7 ist nun vollständig durch die Fuge 5 hindurchgeschoben und befindet sich in einem ausgeklappten oder entspannten Zustand. Der Abdeckungsabschnitt 2, welcher aus einem elastischen Material besteht und im entspannten Zustand eine Krümmung aufweist, ist an die Inneneinrichtungen 3, 4 angedrückt und übt somit über seine Federkraft einen starken Druck auf die Inneneinrichtungen 3, 4 aus, wodurch der Klemmabschnitt 6, 7 in Richtung des Pfeils 16 gezogen wird.

Fig. 9C zeigt die dritte und letzte Phase der Fugenabdeckungsmontage. Der hintere Bereich 6 des Klemmabschnitts 6, 7 liegt nun fest auf den Oberflächen der Inneneinrichtungen 3, 4 auf und klemmt somit im Zusammenspiel mit dem (immer noch gespannten) Abdeckungsabschnitt 2 an den Inneneinrichtungen 3, 4 fest. Natürlich kann zur weiteren Halterung der Fugenabdeckung an der Inneneinrichtung 3 Klebstoff im Bereich 17 vorgesehen sein, wodurch die Fugenabdeckung mit der Inneneinrichtung 3 fest verbunden werden kann.

Die angepasste Fugenabdeckung stellt eine kostengünstige Möglichkeit dar, unterschiedliche Kabinengestaltungsvarianten zu verwirklichen. Durch die Änderung des visuell wichtigen Bereiches in der Wahrnehmungszone der Passagiere können neuartige Kabinenwirkungen mit einem seriell hergestellten Zusatzteil (Fugenabdeckung) erreicht werden.

Die formale Konzeption einer Standardkabine kann den individuellen Kundenwünschen angepasst werden. Mit zusätzlichen Bauteilen, wie Beleuchtung, Lautsprecher, Bildschirmen, Beduftungseinrichtungen oder transluzenten Materialien kann der Gesamteindruck der Kabine kundenspezifisch verändert werden. Die Anpassung des Kabinenlayouts an die Kundenbedürfnisse kann somit schnell und kosteneffizient durchgeführt werden.

Innerhalb dieser Konzeption können bei Leasingprodukten oder Secondhandverkehrsmitteln bei einem Betreiberwechsel die Kabinen ohne große Umbauten und entsprechender Neuzertifizierung dem Kundenwunsch angepasst werden.

Es können alle Fugen mit der Fugenabdeckung (auch nachträglich!) versehen werden. Weiterhin ist es möglich, die Fugenabdeckung mit kundenspezifischer Dekorfolie zu beziehen oder mit entsprechendem Strukturlack zu versehen.

Bevor das Bauteil verklebt oder anderweitig montiert wird, können Zusatzbaugruppen, wie Lichtfünktionen, Beduftungseinheiten, Lautsprecher oder Mini-Screens, montiert werden. Weiterhin kann das kundenspezifische Abdeckteil auch spezielle Funktionen, wie LED-Lichteffekte, aufweisen.

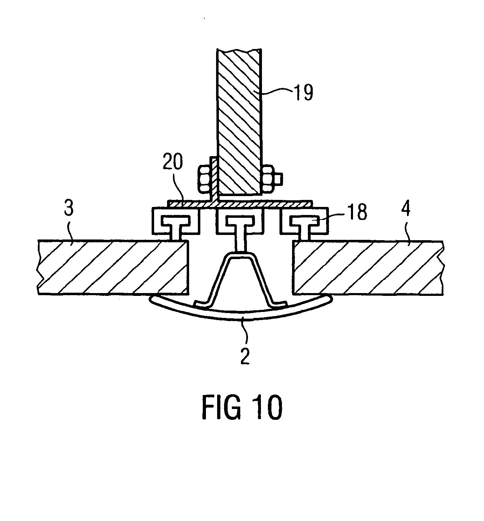

Fig. 10 zeigt eine schematische Querschnittsdarstellung einer weiteren Fugenabdeckung gemäß eines Ausführungsbeispiels der vorliegenden Erfindung. Wie in Fig. 10 zu erkennen, kann die Anbindung der Fugenabdeckung parallel zu den Fenster-Paneelen direkt an der Flugzeugstruktur, wie beispielsweise Flugzeugspant 19, erfolgen. Die beiden Paneelen 3, 4 können sich auf diese Weise unabhängig von der Fugenabdeckung bewegen. Die Befestigung der Paneelen sowie der Fugenabdeckung kann dabei über Standardklips 18 erfolgen, die auf einer Halterungsplatte 20 montiert werden können.

Die Erfindung beschränkt sich in ihrer Ausführung nicht auf die in der Figur dargestellte bevorzugte Ausführungsform. Vielmehr ist eine Vielzahl von Varianten denkbar, welche von der dargestellten Lösung und dem erfindungsgemäßen Prinzip auch bei grundsätzlich anders gearteten Ausführungsformen Gebrauch macht.

Ergänzend sei darauf hingewiesen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Fugenabdeckung zur Abdeckung einer Fuge (5) zwischen einem ersten Element (3) und einem zweiten Element (4) in einem Flugzeug, umfassend:
einen Klemmabschnitt (6, 7); und
einen Abdeckungsabschnitt (2);
wobei der Abdeckungsabschnitt (2) zur Abdeckung einer Fuge (5) zwischen einem ersten Element (3) und einem zweiten Element (4) ausgeführt ist;
wobei der Klemmabschnitt (6, 7) zum Befestigen der Fugenabdeckung zumindest an einem dritten Element derart ausgeführt ist, dass das erste und das zweites Element (3,4) relativ zueinander bewegbar sind, so dass sich die Fuge (5) zusammenziehen kann.

2. Fugenabdeckung nach Anspruch 1,
wobei das erste Element (3) eine erste Inneneinrichtung eines Flugzeugs und das zweite Element (4) eine zweite Inneneinrichtung eines Flugzeugs ist.

3. Fugenabdeckung nach Anspruch 1 oder 2,
wobei der Abdeckungsabschnitt (2) im Wesentlichen aus einem elastischen Material besteht;
wobei der Abdeckungsabschnitt (2) im entspannten Zustand eine Krümmung aufweist;
und
wobei der Abdeckungsabschnitt (2) nach Montage der Fugenabdeckung in der Fuge (5) unter Spannung vorderseitig an dem ersten Element (3) und dem zweiten Element (4) angelegt ist.

4. Fugenabdeckung nach einem der Ansprüche 1 bis 3,
wobei ein erster Teilbereich (6) des Klemmabschnitts (6, 7) bei Montage der Fugenabdeckung durch die Fuge (5) hindurchschiebbar ist; und
wobei der Teilbereich (6) nach Montage der Fugenabdeckung in der Fuge (5) rückseitig an dem ersten Element (3) und dem zweiten Element (4) anliegt, so dass ein Herauslösen der Fugenabdeckung aus der Fuge (5) vermeidbar ist.

5. Fugenabdeckung nach einem der vorhergehenden Ansprüche,
wobei es sich bei dem ersten Element (3) und dem zweiten Element (4) um Verkleidungen handelt, die ihre Lage oder Form relativ zu ihrem Umfeld während eines Flugbetriebes verändern können;
wobei die Fugenabdeckung den Bewegungen des ersten Elements (3) weitgehend folgt; und
wobei der Abdeckungsabschnitt (2) stets an dem ersten Element (3) dem zweiten Element (4) angelegt ist.

6. Fugenabdeckung nach einem der vorhergehenden Ansprüche,
wobei der Klemmabschnitt (6, 7) einen zweiten Teilbereich (7) aufweist, welcher mit dem Abdeckungsabschnitt (2) fest verbunden ist; und
wobei der zweite Teilbereich (7) oder der erste Teilbereich (6) des Klemmabschnitts (6, 7) an dem ersten Element (3) befestigbar ist.

7. Fugenabdeckung nach Anspruch 6,
wobei die Befestigung durch Verkleben, Anclipsen, Ultraschallschweißen, Verschraubten, Vernieten oder durch Haftkraft erfolgt.

8. Fugenabdeckung nach einem der vorhergehenden Ansprüche, weiterhin umfassend ein Bauteil ausgewählt aus der Gruppe bestehend aus: Beleuchtungseinrichtung, Sensoreinrichtung, Lautsprecher, und Anzeigeeinrichtung.

9. Fugenabdeckung nach einem der vorhergehenden Ansprüche,
wobei der Abdeckungsabschnitt (2) ein transluzentes Material aufweist, so dass die Fugenabdeckung durchleuchtbar ist.

10. Fugenabdeckung nach einem der vorhergehenden Ansprüche,
wobei die Fugenabdeckung als Strangpressprofil ausgebildet ist.

11. Fugenabdeckung nach einem der Ansprüche 1 bis 9,
wobei die Fugenabdeckung als Spritzgussteil ausgebildet ist.

12. Verwendung einer Fugenabdeckung nach einem der Ansprüche 1 bis 11 in einem Flugzeug.

13. Flugzeug, umfassend eine Fugenabdeckung nach einem der Ansprüche 1 bis 11.

## Claims

1. A joint cover for covering a joint (5) between a first element (3) and a second element (4) in an aircraft, comprising:
a clamp section (5, 6); and
a cover section (2);
wherein the cover section (2) is adapted to cover a joint (5) between a first element (3) and a second element (4);
wherein the clamp section (5, 6) is adapted to attach the joint cover to at least a third element, such that the first and the second element (3, 4) are movable in relation to one another, so that the joint (5) can contract.

2. The joint cover of claim 1,
wherein the first element (3) is a first interior furnishing of an aircraft and the second element (4) is a second interior furnishing of an aircraft.

3. The joint cover of claim 1 or 2,
wherein the cover section (2) essentially consists of an elastic material;
wherein the cover section (2) has a curvature in the relaxed state; and
wherein, after mounting of the joint cover in the joint (5), the cover section (2) is biased against a front side of the first element (3) and the second element (4).

4. The joint cover of one of claims 1 to 3,
wherein a first partial area (6) of the clamp section (6, 7) is pushable through the joint (5) during mounting of the joint cover; and
wherein the partial area (6) abuts against a back side of the first element (3) and the second element (4) after mounting of the joint cover, so that a detachment of the joint cover from the joint (5) is avoidable.

5. The joint cover of one of the preceding claims,
wherein the first element (3) and the second element (4) are panels that are adapted to change their position or shape in relation to their surroundings during flight operation;
wherein the joint cover largely follows the movements of the first element (3); and wherein the cover section (2) always abuts against the first element (3) and the second element (4).

6. The joint cover of one of the preceding claims,
wherein the clamp section (6, 7) comprises a second partial area (7) which is fixedly connected to the cover section (2); and
wherein the second partial area (7) or the first partial area (6) of the clamp section (6, 7) is attachable to the first element (3).

7. The joint cover of claim 6,
wherein the attachment is performed through gluing, clipping, ultrasonic welding, screwing, riveting, or adhesive force.

8. The joint cover of one of the preceding claims, further comprising a component selected from the group consisting of:
illumination device, sensor device, loudspeaker, and display device.

9. The joint cover of one of the preceding claims,
wherein the cover section (2) comprises a translucent material, so that light may pass through the joint cover.

10. The joint cover of one of the preceding claims,
wherein the joint cover is implemented as an extruded profile.

11. The joint cover of one of the claims 1 to 9,
wherein the joint cover is implemented as an injection molded part.

12. A use of a joint cover according to one of the claims 1 to 11 in an aircraft.

13. An aircraft comprising a joint cover according to one of the claims 1 to 11.

## Revendications

1. Couverture de joint pour le recouvrement d'un joint (5) entre un premier élément (3) et un deuxième élément (4) dans un avion, comprenant :
une section de serrage (6, 7) ; et
une section de recouvrement (2) ;
couverture dans laquelle la section de recouvrement (2) est réalisée pour recouvrir un joint (5) entre un premier élément (3) et un deuxième élément (4) ;
dans laquelle la section de serrage (6, 7) est réalisée pour la fixation de la couverture de joint au moins sur un troisième élément de telle sorte que le premier et le deuxième élément (3, 4) peuvent être déplacés l'un par rapport à l'autre, si bien que le joint (5) peut se resserrer.

2. Couverture de joint suivant la revendication 1, dans laquelle le premier élément (3) est un premier équipement intérieur d'un avion et le deuxième élément (4) est un deuxième équipement intérieur d'un avion.

3. Couverture de joint suivant l'une des revendications 1 et 2, dans laquelle la section de recouvrement (2) se compose essentiellement d'un matériau élastique ;
la section de recouvrement (2) présente un cintrage dans l'état de détente ; et
la section de recouvrement (2), après le montage de la couverture de joint dans le joint (5), est appliquée sous contrainte du côté avant sur le premier élément (3) et sur le deuxième élément (4).

4. Couverture de joint suivant l'une des revendications 1 à 3, dans laquelle une première zone partielle (6) de la section de serrage (6, 7) peut être poussée au travers du joint (5) lors du montage de la couverture de joint; et
la zone partielle (6), après le montage de la couverture de joint dans le joint (5), s'applique du côté arrière sur le premier élément (3) et sur le deuxième élément (4), de sorte qu'un détachement de la couverture de joint hors du joint (5) est évitable.

5. Couverture de joint suivant l'une des revendications précédentes, dans laquelle,
le premier élément (3) et le deuxième élément (4) sont des habillages, qui peuvent modifier leur position ou leur forme par rapport à leur champ ambiant pendant un service aérien ;
la couverture de joint suit largement les mouvements du premier élément (3) ; et
la section de recouvrement (2) est appliquée constamment sur le premier élément (3) et sur le deuxième élément (4).

6. Couverture de joint suivant l'une des revendications précédentes, dans laquelle
la section de serrage (6, 7) présente une seconde zone partielle (7), assemblée fixement avec la section de recouvrement (2) ; et
la seconde zone partielle (7) ou la première zone partielle (6) de la section de serrage (6, 7) peut être fixée sur le premier élément (3).

7. Couverture de joint suivant la revendication 6, dans laquelle la fixation s'effectue par collage, clipsage, soudage par ultrasons, vissage, rivetage ou par force d'adhérence.

8. Couverture de joint suivant l'une des revendications précédentes, comprenant en outre un composant sélectionné parmi le groupe constitué de :
un dispositif d'éclairage, un dispositif de détection, un haut-parleur et un dispositif d'affichage.

9. Couverture de joint suivant l'une des revendications précédentes, dans laquelle la section de recouvrement (2) présente un matériau translucide, de sorte que la couverture de joint peut être éclairée par transparence.

10. Couverture de joint suivant l'une des revendications précédentes, dans laquelle la couverture de joint est réalisée sous forme de profilé extrudé.

11. Couverture de joint suivant l'une des revendications 1 à 9, dans laquelle la couverture de joint est réalisée sous forme de pièce moulée par injection.

12. Utilisation d'une couverture de joint suivant l'une des revendications 1 à 11 dans un avion.

13. Avion, comprenant une couverture de joint suivant l'une des revendications 1 à 11.
